# EUROPEAN PATENT SPECIFICATION

(11) **EP 4 156 152 B1**
(45) Date of publication and mention of the grant of the patent: **21.10.2026**
(21) Application number: 20929689.6
(22) Date of filing: 24.06.2020
(51) Int. Cl.: G09F 9/30, G06F 1/16

(54) **FOLDABLE DISPLAY DEVICE**
FALTBARE ANZEIGEVORRICHTUNG
DISPOSITIF D'AFFICHAGE PLIABLE

(30) Priority: 19.05.2020 CN 202010427172
(43) Date of publication of application: 29.03.2023
(73) Proprietor: Wuhan China Star Optoelectronics Semiconductor Display Technology Co., Ltd., Wuhan, Hubei 430079 (CN)
(72) Inventor: HAN, Wen, Wuhan Hubei 430079 (CN)
(74) Representative: Ström & Gulliksson AB
(86) International application number: PCT/CN2020/098016
(87) International publication number: WO 2021/232533

(56) References cited:
- CN-A- 108 122 491
- CN-A- 109 887 928
- CN-A- 110 335 544
- CN-A- 110 649 087
- CN-A- 110 767 096
- US-A1- 2018 097 197
- US-A1- 2018 102 496
- US-A1- 2019 132 947

## Description

### FIELD OF INVENTION

The present disclosure relates to the field of display technology, and more particularly, to a foldable display device.

### BACKGROUND OF INVENTION

With development of display technology, consumer demand for display panels has become more diverse and personalized. Foldable display devices have advantages of being bendable and easy to carry, and are favored by consumers.

US20190132947A1 discloses a flexible display unit including a flexible display, and a flexible frame coupled to the flexible display, the flexible frame including a first rigid portion, a second rigid portion, and a flexible portion located between the first and second rigid portions and configured to permit the frame to be bent, the flexible portion including a first region including a first plurality of holes having a first size, and a second region including a second plurality of holes having a second size, wherein the first size is greater than the second size, the first region is positioned closer to a center axis of the flexible frame than the second region, and an area of the first plurality of holes within a portion of the first region is greater than an area of the second plurality of holes within a portion of the second region having the same area.

US20180097197A1 discloses a flexible display device including a flexible display panel and a back cover disposed on a back surface of the flexible display panel and having a plurality of opening patterns provided in the third region.

### SUMMARY OF INVENTION

To alleviate problems of waviness and creases caused by repeated folding or unfolding of current foldable display devices, a metal sheet covering an entire surface of display panel and a supporting plate covering only a non-bending region of the display panel need to be respectively attached to a back side of the display panel, which not only increase difficulty of assembly and production costs, but also cause a step difference in the bending region of the display panel due to an incomplete coverage of the supporting plate, reducing flatness of the display device.

In summary, current foldable display devices have problems of poor flatness and difficulty in assembly. Therefore, it is necessary to provide a foldable display device to improve the defect.

An embodiment of the present disclosure provides a foldable display device which is configured to solve problems of poor flatness and difficulty in assembly of current foldable display devices.

The invention is defined in the appended set of claims.

### DESCRIPTION OF DRAWINGS

In order to illustrate technical solutions of the embodiments or prior art more clearly, drawings used in a description of the embodiments will be briefly described as below. Obviously, the drawings described as below are just some embodiments of the present disclosure. For those of ordinary skill in the art, under a premise of no creative labor, other drawings can also be obtained according to these drawings.
FIG. 1 is a schematic structural diagram of an entire foldable display device provided by an embodiment of the present disclosure.
FIG. 2 is a schematic structural diagram of a supporting plate provided by the embodiment of the present disclosure.
FIG. 3 is a schematic diagram of detail part A in FIG. 2.
FIG. 4 is a schematic diagram of detail part B in FIG. 2.
FIG. 5 is a schematic structural diagram of a bending region of the supporting plate provided by the embodiment of the present disclosure.
FIG. 6 is another schematic structural diagram of the supporting plate provided by the embodiment of the present disclosure.
FIG. 7 is a schematic diagram of a folded state of a display panel provided by the embodiment of the present disclosure.
FIG. 8 is a schematic diagram of bonding of the supporting plate and the display panel provided by the embodiment of the present disclosure.
FIG. 9 is a schematic bending diagram of bending of a flip-chip film and a flexible circuit board of the display panel provided by the embodiment of the present disclosure.
FIG. 10 is a schematic structural diagram of film layers provided by the embodiment of the present disclosure.

### DETAILED DESCRIPTION OF PREFERRED EMBODIMENTS

The following description of the embodiments with reference to the appended drawings is used for illustrating specific embodiments which may be used for carrying out the present disclosure. The directional terms described by the present disclosure, such as "upper", "lower", "front", "back", "left", "right", "inner", "outer", "side", etc., are only directions by referring to the accompanying drawings. Thus, the adopted directional terms are used to describe and understand the present disclosure, but the present disclosure is not limited thereto. In figures, elements with similar structures are indicated by the same numbers.

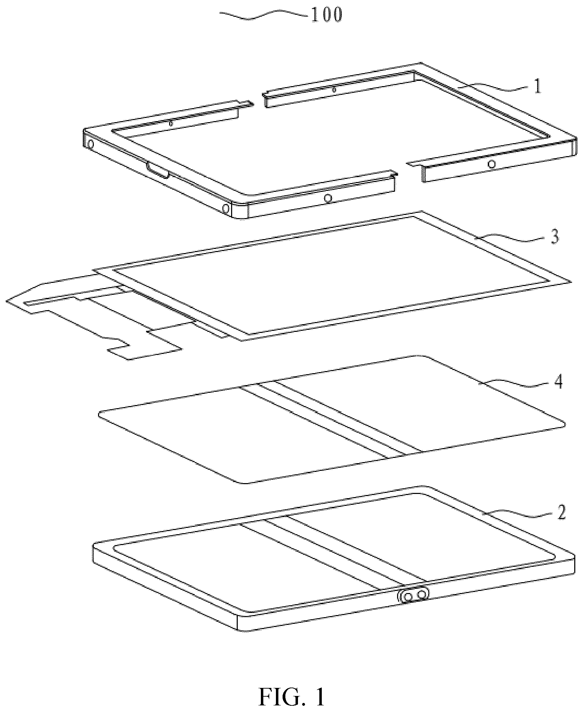

The disclosure will be further described below with reference to the drawings and specific embodiments:
An embodiment of the present disclosure provides a foldable display device, which will be described in detail below with reference to FIGS. 1 to 10.

As shown in FIG. 1, FIG. 1 is a schematic structural diagram of an entire foldable display device provided by an embodiment of the present disclosure. The foldable display device 100 comprises a front frame 1 and a bottom frame assembly 2 for folding thereof into a folded state and an unfolded state, and the foldable display device 100 further comprises a display panel 3 and a supporting plate 4. The front frame is configured to cover the display panel 3 and the bottom frame assembly 2, the bottom frame assembly 2 is configured to carry the front frame 1, the display panel 3, and the supporting plate 4, the display panel 3 is disposed between the front frame 1 and the bottom frame assembly 2, and the supporting plate 4 is disposed between the display panel 3 and the bottom frame assembly 2 and is located at a side of the display panel 3 away from a display surface thereof.

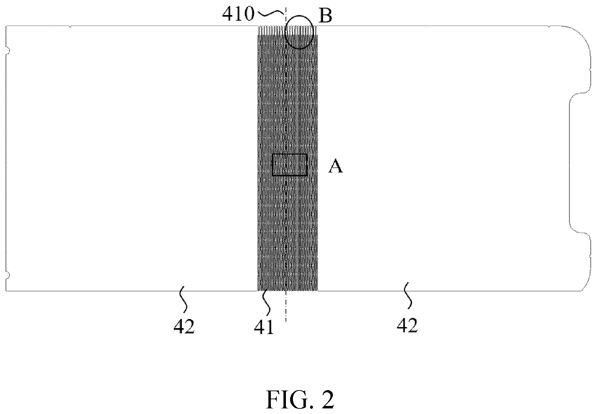

As shown in FIG. 2, FIG. 2 is a schematic structural diagram of a supporting plate provided by the embodiment of the present disclosure. The supporting plate 4 comprises a bending region 41 and a non-bending region 42 on both sides of the bending region 41, the bending region 41 comprises a dummy bending axis 410, and the supporting plate 4 can be unfolded or folded along the bending axis 410.

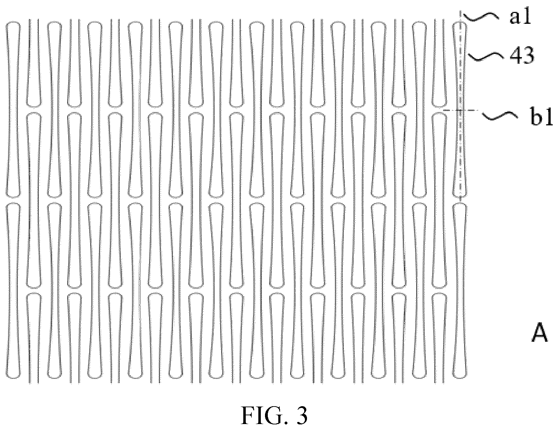

As shown in FIG. 3, FIG. 3 is a schematic diagram of detail part A in FIG. 2. The bending region 41 is provided with a plurality of openings 43, the opening 43 comprises a dummy first long axis a1 and a dummy first short axis b1, the first long axis a1 of the opening 43 located on the bending axis 410 coincides with the bending axis 410, a direction of the first long axis a1 of the other openings 43 is parallel with a direction of the bending axis 410, and a direction of the first short axis b1 is perpendicular to a direction of the bending axis 410. An orthographic projection pattern of the opening 43 on the support plate 4 may be respectively symmetrical about the first long axis a1 and the first short axis b1.

A distance between inner walls of both sides of the openings 43 in the direction of the first long axis a1 gradually decreases from both ends to middle of the openings (that is, a position of the first short axis b1) along the direction of the first long axis a1, which forms a "dog bone" shape with a greater distance between side walls of both ends of the opening and a narrow middle distance as shown in FIG. 3. The opening 43 is stretched and widened when the supporting plate 4 is bent and tensioned, and a thinner portion in the middle is affected by tensile stress on both sides, so that the supporting plate 4 has excellent extension performance. During folding process of the foldable display device, the supporting plate 4 can be stretched and extended simultaneously with length change of the display panel 3, which gives the display panel 3 space for the length change and can disperse and reduce the stress of the supporting plate 4 during folding thereof, thereby accordingly reducing compression stress on the display panel 3, reducing relative misalignment between the supporting plate 4 and the display panel 3, and reducing a risk of the supporting plate 4 from being separated from the display panel 3 and inner film layers of the display panel 3.

Specifically, as shown in FIG. 3, the openings 43 are arranged in an entire bending region 41 according to a certain density array which forms a discontinuous grid structure, and any two adjacent columns of openings 43 are staggered. On the one hand, a density of the openings 43 arranged in the bending region 41 can be increased; on the other hand, staggered openings 43 are affected by material strength of an adjacent unopened portion. After bending force disappears, a stretched portion in the middle of the openings 43 can be quickly restored to its original state, so that the supporting plate 4 has a good ability to restore deformation, reduce waviness and creases caused by repeated folding and unfolding of the display panel, and ensure flatness of the display panel 3 after the unfolded state is restored.

Moreover, an interval between the openings 43 in one of the two adjacent columns of openings along a direction perpendicular to the bending axis 410 corresponds to the first short axis b1 of the other column of the openings 43. Therefore, the opening 43 is provided with a highest density, and a middle portion of the opening 43 corresponds to a portion with the most unopened material, which gives the openings 43 enough tensile deformation space, and at the same time does not affect a wall thickness of a greater portion of the both ends of the opening 43. Hence, under condition of ensuring sufficient strength of the bending region of the supporting plate 4, extension performance and recovery ability of the supporting plate are improved, and an extension rate of the supporting plate 4 can reach more than 10%.

In addition, in some embodiments, as a modified structure of an arrangement of the openings 43, two adjacent columns of openings 43 may also be arranged in parallel. Therefore, a technical effect of improving extension performance of the supporting plate, and dispersing and reducing stress in the bending region 41 can also be realized, which is not limited herein.

Moreover, a shape of the orthographic projection pattern of the two side walls of the opening 43 corresponding to the first long axis a1 on the supporting plate 4 is an arc, and a curvature or radian R of the arc can be calculated according to extension length of the supporting plate 4 in the folded state, deformation amount of the opening 43, and a number of the opening 43. In addition, the shape of the orthographic projection pattern of the two side walls of the opening 43 corresponding to the first long axis a1 on the supporting plate 4 is not limited to the arc shape. In some embodiments, it can also be any other curve, and no specific restrictions are made here.

Moreover, the opening 43 provided by the embodiment of the present disclosure comprises but is not limited to a through-hole or a blind hole. Therefore, the supporting plate 4 can be dispersed and reduce stress during bending.

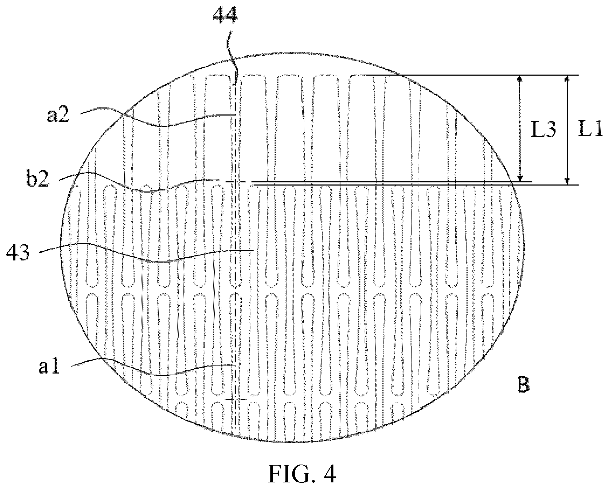

As shown in FIG. 4, FIG. 4 is a schematic diagram of detail part B in FIG. 2. The supporting plate 4 is further provided with a plurality of bending openings 44 arranged at intervals, the bending openings 44 are formed by boundaries on opposite sides of the bending region 41 respectively extending toward the bending region 41 along the direction of the bending axis 410, and an opening direction of the bending opening 44 is equal to or opposite to the direction of the first long axis a1 of the opening 43.

Specifically, the bending opening 44 comprises a dummy second long axis a2 and a dummy second short axis b2, the second long axis a2 coincides with the direction of the first long axis a1 of the opening 43 in a same column, and the second short axis b2 is perpendicular to the second long axis a2. A distance between inner walls of both sides of the bending openings 44 extending along a direction of the second long axis a2 gradually decreases from both ends to middle of the bending openings 44 (that is, a position of the second short axis) along the direction of the second long axis a2, that is, from an end of the bending openings 44 away from a boundary of the bending region 41 to the second short axis b2, the distance between the inner walls on both sides of the bending openings 44 gradually decreases; from the second short axis b2 to the bending opening 44 located at the opening of a boundary of the bending region 41, the distance between the inner walls on both sides gradually increases, which not only improves extension performance of the supporting plate 4 and reduces squeezing stress on the display panel 3 during the bending process on both sides of the bending region 41, but can reduce an amount of shrinkage caused by deformation of the both sides of the bending region 41 of the supporting plate 4 during the bending process and the depression from the both sides to an inside of the bending region 41, thereby improving support effect on the display panel 3 at boundaries between the both sides of the bending region 41 of the supporting plate 4, and eliminating creases caused by the corresponding display panel 3 without the supporting plate 4 at boundaries between the both sides of the bending region 41 caused by the shrinkage on both sides.

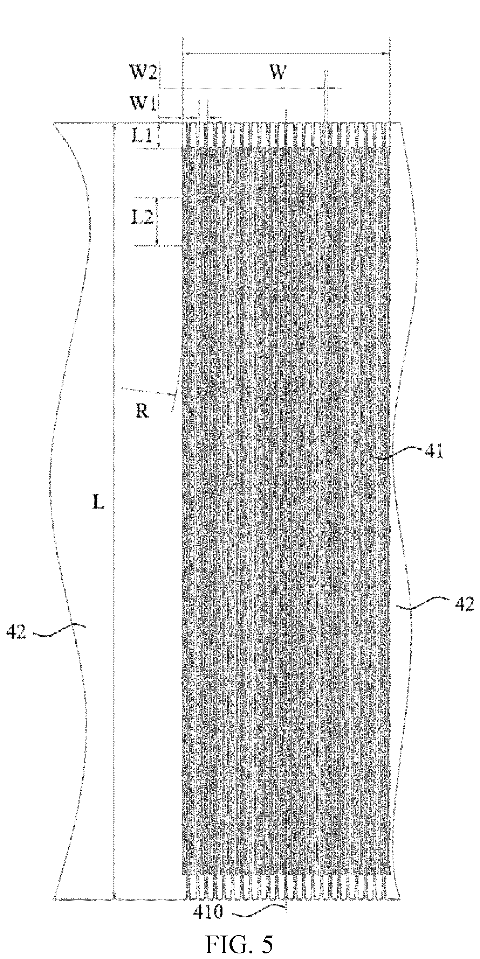

Furthermore, as shown in FIG. 5, a column of the openings 43 is spaced between adjacent bending openings 44 on a same side of the bending region 41 along the direction perpendicular to the bending axis 410. A distance L1 between the opening 43 at both ends in a column of openings adjacent to the bending openings 44 and the boundaries between the both sides of the bending region 41 is greater than a distance L3 between the second short axis b2 and the boundary of the bending region 41, so that the bending opening 44 is provided without openings 43 on both sides of a portion from the second short axis b2 to the opening at boundary, to increase an area of the portion where the opening 43 is not provided around the bending opening 44 on the both sides of the bending region 41, to improve strength of the boundaries on both sides of the bending region 41 of the supporting plate 4, and to improve bending resistance of the supporting plate 4, thereby preventing the boundaries of the both sides of the bending region 41 from breaking due to concentrated stress during the bending process. Moreover, in some embodiments, adjacent openings on a same side can also be spaced with 3 columns or 5 columns of odd-numbered columns of openings, and can also obtain good bending resistance, which is not limited herein.

**In** the embodiment of the present disclosure, the display panel 3 comprises a panel bending region and a panel non-bending region located at both sides of the panel bending region. **In** the unfolded state, an orthographic projection region of the bending region 41 of the supporting plate 4 on the display panel 3 covers the panel bending region, and a width of the bending region 41 of the supporting plate 4 in the direction perpendicular to the bending axis 410 is greater than a width of the panel bending region in the direction perpendicular to the bending axis. The bending region 41 of the supporting plate 4 beyond the bending region of the panel is stretched and extended during the bending process, which can provide enough space for stress relief and strain dislocation movement at a junction of the panel bending region and the panel non-bending region of the display panel 3, and reduce a risk of film layers of the display panel 3 from being separated.

In order to ensure sufficient space for stress relief, in the unfolded state, the width of any side of the bending region 41 in the direction perpendicular to the bending axis 410 is at least 1 mm greater than the same side of the panel bending region.

Specifically, as shown in FIG. 5, FIG. 5 is a schematic structural diagram of the bending region of the supporting plate provided by the embodiment of the present disclosure. In the unfolded state, a column of the openings is spaced between the adjacent bending openings along the direction perpendicular to the bending axis 410, a number of bending openings 44 provided on one side of the supporting plate 4 is n, a distance between a first end of the bending openings 44 and a first end of the adjacent bending opening is W1, a maximum distance between the inner walls on both sides of the openings 43 in the direction of the first long axis a1 is W2, and a width of the bending region 41 is W, wherein a width of the panel bending region of the display panel 3 is Wd≤W=n*W1+2W2.

Along the direction to the bending axis 410, a number of the opening 43 in a column of openings adjacent to the bending openings 44 is **N,** a distance between the first end of the openings 43 and the boundary of the bending region 41 is L1, a distance between the first end of the openings 43 and the first end of the adjacent openings in a same column is L2, wherein a length of the supporting plate 4 in the direction of the bending axis 410 is L=N*L2+2L1.

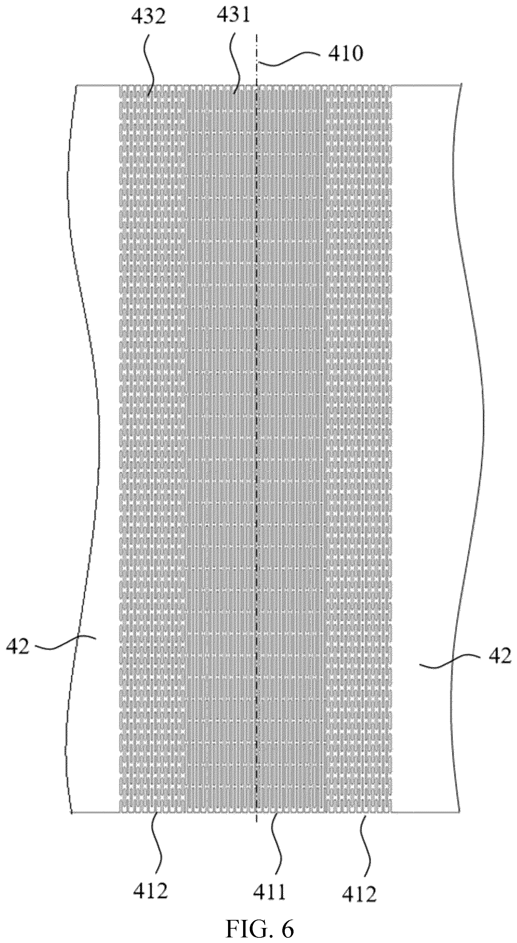

The embodiment of the present disclosure further provides a foldable display device, the foldable display device has substantially the same structure as the foldable display device provided in the above embodiments, and difference is shown in FIG. 6. FIG. 6 is another schematic structural diagram of the supporting plate provided by the embodiment of the present disclosure. The bending region 41 of the supporting plate 4 comprises a first bending region 411 and a second bending region 412 between the first bending region 411 and the non-bending region 42, the bending axis 410 is located in the first bending region 411, the first bending region 411 comprises a first opening 431, the second bending region 412 comprises a second opening 432, and a size and a density of the first opening 431 and a size and a density of the second opening 432 are different.

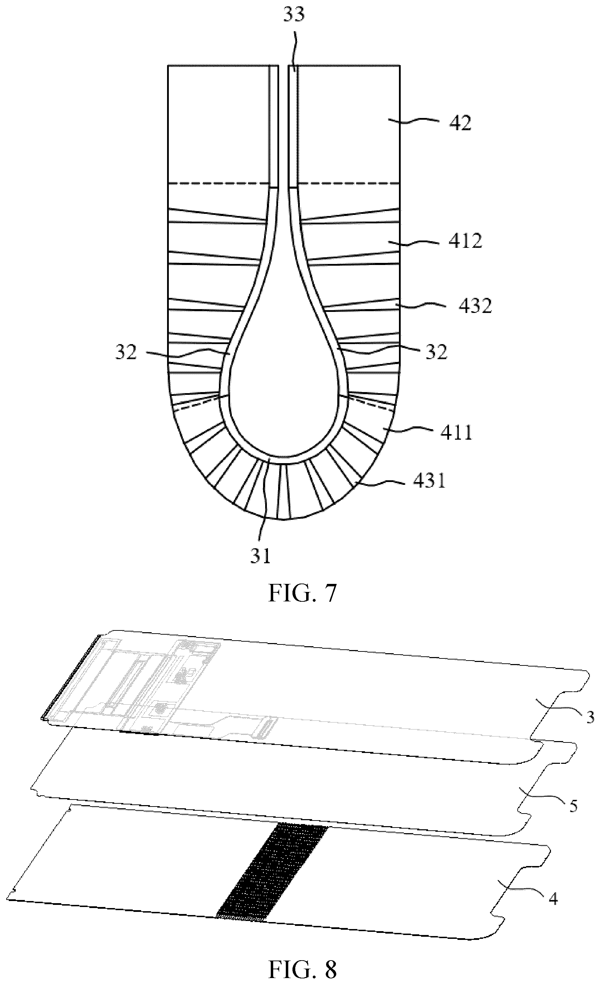

As shown in FIG. 7, FIG. 7 is a schematic diagram of a folded state of a display panel provided by the embodiment of the present disclosure. The panel bending region of the display panel 3 further comprise a first panel bending region 31 and a second panel non-bending region 32 between the first panel bending region 31 and the panel non-bending region 33, and the second panel bending region 31 is in a bending transition region of the first panel bending region 31 and the panel non-bending region 33. When the display panel 3 is bent to the folded state, display surfaces of both sides of the panel non-bending region 32 are arranged relatively parallel, the bending region of the panel forms a drop shape, the first panel bending region 31 is concavely bent inward, and the second panel bending region 31 is convexly bent toward the second panel bending region 31 on the opposite side. A slope of the second panel bending region 32 is greater than a slope of the first panel bending region 31, which results in the second panel bending region 32 receiving a greater stress than the first panel bending region 31, so that relative misalignment of the second panel bending region 32 is greater than that of the first panel bending region 31, and the risk of film separation is higher than that of the first panel bending region 31.

Preferably, the size of the first opening 431 in the first bending region 411 should be greater than the size of the second opening 432 in the second bending 412, and the density of the first opening 431 in the first bending region 411 should be less than the density of the second opening 432 in the second bending region 412. By reducing the size of the openings and increasing the density of the openings, extension performance and ability to recover deformation of the second bending region 412 of the supporting plate are greater than that of the first bending region 411, and the second bending region 412 is dispersed and reduced stress during bending, thereby correspondingly reducing stress received by the second panel bending region 32, so that forces on the display panel 3 are balanced, and the risk of film layers being separated is reduced.

Furthermore, the size and density of the openings 43 in the bending region 41 are a multi-step change, that is, the size and density of each first opening 431 in the first bending region 411 are equal, and the size and density of each second opening 432 in the second bending region 412 are equal, which can disperse and reduce stress of the second bending region 412 during bending, so that stress in each portion of the display panel 3 is balanced, thereby reducing the risk of film layers from being separated. **In** addition, the multi-step change of the size and density of the openings 41 in the bending region 41 is not limited to the three-step change provided by the embodiment of the present disclosure, in other embodiments, it can also comprise fewer or more steps of changes, all of which can realize the above technical effects, which is not limited herein.

Moreover, in some embodiments, the size and density of the openings 43 in the bending region 41 can also gradually change, that is, along the bending axis 410 to the non-bending region 42, along the bending axis to a boundary between the first bending region 411 and the second bending region 421, or along the boundary between the first bending region 411 and the second bending region to the non-bending region 42, the size of the openings 43 is decreasing (or increasing), the density of the openings 43 is increasing (or decreasing), which can also realize same technical effects as the above embodiments, and is not limited herein.

As a deformed structure of the size and density setting method of the opening 43 in the bending region 41, only the first bending region 411 and the second bending region 412 can maintain change of one of the size or density of the openings, while the other remains the same. Therefore, effects of increasing the bending performance and restoring deformability of the supporting plate 4, and dispersing and reducing stress of the bending region 41 of the supporting plate 4 can also be realized.

Furthermore, the second opening 432 in the second bending region 412 is a through-hole, the first opening 431 in the first bending region 411 is a blind hole, and an opening of the blind hole is towards a side away from the display panel 3 or close to the display panel 3.

Preferably, the opening of the blind hole is towards the side away from the display panel 3, and an unopened portion of the first bending region 411 of the supporting plate 4 remains flat. Therefore, in the case of through-holes combined with blind holes, not only can sufficient extension performance of the supporting plate 4 and recovering deformability be supported, but also a flat portion of the supporting plate 4 can support the first panel bending region 31, which reduces waviness and creases caused by repeated folding and unfolding of the display panel 3, and improves flatness of the display panel 3. Moreover, in some embodiments, the opening of the blind hole may also be towards the side close to the display panel 3, which can also realize the effect of improving extension performance of the supporting plate 4 and restoring the deformability, and is not limited herein.

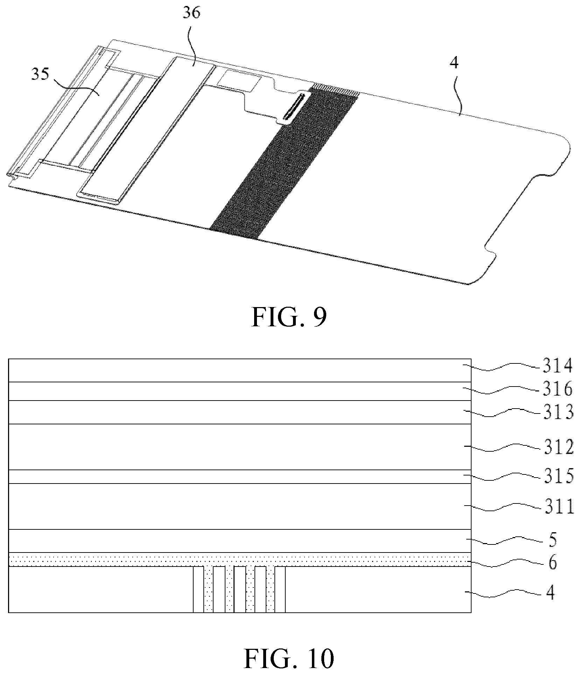

In the embodiment of the present disclosure, as shown in FIG. 8, the display panel 3 and the supporting plate 4 are bonded by an entire surface of a flexible foldable optical adhesive layer 5. As shown in FIG. 9, the display panel 3 comprises a flip-chip film 35 and a flexible circuit board 36, the flip-chip 35 and the flexible circuit board 36 can be bent to a side of the supporting plate 4 away from the display panel 3. Therefore, a bending of the display panel 3 is not affected, and screen ratio of the foldable display device 100 can also be improved.

Specifically, as shown in FIG. 10, FIG. 10 is a schematic structural diagram of film layers provided by the embodiment of the present disclosure. The display panel 3 further comprise a back plate 311, a touch control display device layer 312, a polarizer 313, and a package cover 314 that are laminated, the back plate 311 and the touch control display device layer 312 are bonded by a pressure-sensitive adhesive layer 315, and the package cover 314 and the polarizer 313 are bonded by an optical adhesive layer 316.

Preferably, an elastic layer 6 is disposed between the display panel 3 and the supporting plate 4, the elastic layer is disposed between the supporting plate 4 and a foldable optical adhesive layer 5, and covers the supporting plate 4 on an entire surface. In the preferred embodiment, a material of the elastic layer 6 is silicone resin that is liquid before curing and has good fluidity. When the silicone resin is screen-printed on a surface of the supporting plate 4, the silicone material can be filled into the opening 43, and after curing, an integrated grid structure can be formed with the opening 43 of the supporting plate. The silicone material has good elasticity and elongation properties. During bending of the supporting plate 4 and the display panel 3, the elastic layer 6 can follow the adjacent flexible foldable optical adhesive layer 5 to move simultaneously, thereby reducing relative misalignment between the supporting plate 4 and the display panel 3, and reducing a risk of film layers between the display panel 3 and the adjacent film layer from being separated. At the same time, the elastic layer 6 is filled into the opening 43, which can further provide the opening 43 with a good ability to recover from deformation, so that the display panel 3 can be quickly restored to the unfolded state after being folded, thereby effectively eliminating creases and ripples caused by folding.

Moreover, in other embodiments, the elastic layer 6 can also be replaced by a foam rubber layer, which also has good elongation performance and recovery deformation ability, and can achieve a same technical effect as the elastic layer 6.

In the embodiment of the present disclosure, a material of the supporting plate 4 is stainless steel (SUS), which has strong toughness and plasticity, and can not only provide good extension performance for the bending region 41 of the supporting plate 4, but also good strength of the supporting plate itself can further provide good support capacity for each portion of the display panel 3, thereby improving flatness of the display panel 3 when it is unfolded, reducing difficulty of assembling and matching the flexible display panel 3 with the front frame and bottom frame assembly. Moreover, there is no need to replace flexible assembly equipment, reducing investment costs.

In addition, in order to ensure good strength and elongation of the supporting plate 4, a thickness of the supporting plate 4 should range from 0.02mm to 1mm. If the thickness is too thin, supporting strength of the supporting plate 4 is insufficient, and if the thickness is too thick, extension performance and deformation recovery ability of the supporting plate 4 are deteriorated, and a specific value can be selected according to actual needs, which is not limited herein.

Moreover, in some embodiments, the supporting plate 4 can replace an original back plate 31 in the display panel 3, which is conducive to reducing a thickness of the display panel 3 and reducing stress between the film layers, thereby reducing the relative misalignment between the film layers, reducing the risk of the film layers from being separated, improving the bending resistance of the display panel 3, and also saving the cost of the back plate 31 and reducing corresponding manufacturing process.

Moreover, in other embodiments, the material of the supporting plate 4 can also be the same or similar material such as Al, Mg, or liquid metal, and can realize the same technical effect as the above-mentioned stainless steel material, which is not limited herein.

Beneficial effects of the embodiment of the present disclosure are that: the embodiment of the present disclosure further provides a foldable display device. By providing the plurality of openings in the bending region of the supporting plate, the distance between the inner walls of the both sides of the openings in the direction of the first long axis gradually decreases from the both ends of the openings to the middle along the direction of the first long axis. During folding process of the foldable display device, a portion with a short middle distance of the opening is easy to be stretched and widened, and has good extension performance and recovery ability, so that the supporting plate can be stretched and restored simultaneously with length change of the display panel during the bending process, thereby reducing stress and relative misalignment between the supporting plate and the display panel, and reducing a risk of film layers in the display panel from being separated. At the same time, an integrated supporting plate can provide good support for various portions of the display panel to improve flatness of the display device and reduce difficulty in assembling the display panel with the front frame and bottom frame assembly.

As mentioned above, while the present disclosure has been disclosed via preferred embodiments as above, the preferred embodiments are not intended to limit the disclosure. Those skilled in the art can make various modifications and alternations without departing from the scope of the disclosure. The scope of protection of the disclosure is defined by the claims.

## Claims

1. A foldable display device, comprising a front frame (1) and a bottom frame assembly (2) configured to fold the foldable display device into a folded state and an unfolded state, wherein the foldable display device comprises:
a display panel (3) disposed between the front frame (1) and the bottom frame assembly (2); and
a supporting plate disposed between the display panel (3) and the bottom frame assembly (2);
wherein the supporting plate (4) comprises a bending region (41) and non-bending regions (42) on both sides of the bending region (41), the bending region (41) comprises a dummy bending axis (410), the bending region (41) is provided with a plurality of openings (43), the openings (43) comprise a dummy first long axis (a1) and a dummy first short axis (b1), the first long axis (a1) coincides with or is parallel to the bending axis (410), the first short axis (b1) is perpendicular to the bending axis (410), **characterized in that** a distance between inner walls of both sides of the openings (43) in a direction of the first long axis (a1) gradually decreases from both ends to middle of the openings (43) along the direction of the first long axis (a1),
wherein the display panel (3) comprises a panel bending region (31), and in the unfolded state, a width of any side of the bending region (41) of the supporting plate (4) is at least 1 mm greater than a width of the same side of the panel bending region (31), in a direction perpendicular to the bending axis (410).

2. The foldable display device as claimed in claim 1, **characterized in that** the openings (43) are arranged in an array in the bending region (41), and the openings (43) in two adjacent columns are staggered along a direction perpendicular to the bending axis (410).

3. The foldable display device as claimed in claim 2, wherein along the direction perpendicular to the bending axis (410), an interval between the openings (43) in one of the two adjacent columns of openings (43) corresponds to the first short axis (b1) of the other column of the openings (43).

4. The foldable display device as claimed in claim 2, **characterized in that** the supporting plate (4) is provided with a plurality of bending openings (44) arranged at intervals, and the bending openings (44) are formed by boundaries on opposite sides of the bending region (41) respectively extending toward the bending region (41) along a direction of the bending axis (410).

5. The foldable display device as claimed in claim 4, **characterized in that** the bending openings (44) comprise a dummy second long axis (a2) and a dummy second short axis (b2), the second long axis (a2) coincides with a direction of the first long axis (a1) of the opening (43) in a same column, and a distance between inner walls of both sides of the bending openings (44) extending along a direction of the second long axis (a2) gradually decreases from both ends to middle of the bending openings (44) along the direction of the second long axis (a2).

6. The foldable display device as claimed in claim 5, **characterized in that** in the direction perpendicular to the bending axis (410), an odd number of columns of openings (43) are spaced between adjacent bending openings (44) on a same side, and a distance between the openings (43) at both ends in a column of openings (43) adjacent to the bending openings (44) and boundaries between both sides of the bending region (41) is greater than a distance between the second short axis (b2) and the boundary of the bending region (41).

7. The foldable display device as claimed in claim 1, **characterized in that** a column of the openings (43) is spaced between the adjacent bending openings (44) along the direction perpendicular to the bending axis (410); and
a width of the bending region (41) is W, and W=n*W1+2W2;
wherein along the direction perpendicular to the bending axis (410), n is a number of bending openings (44) on one side of the supporting plate (4), W1 is a distance between a first end of the bending openings (44) and a first end of the adjacent bending opening (44), and W2 is a maximum distance between the inner walls on both sides of the openings (43) in the unfolded state.

8. The foldable display device as claimed in claim 7, **characterized in that** a length of the supporting plate (4) in the direction of the bending axis (410) is **L,** and L=N*L2+2L1;
wherein along the direction of the bending axis (410), N is a number of openings (43) in the column of openings (43) adjacent to the bending openings (44), L2 is a distance between a first end of the openings (43) and a first end of the adjacent openings in a same column, and L1 is a distance between the first end of the openings (43) and the boundary of the bending region (41).

9. The foldable display device as claimed in claim 2, **characterized in that** the bending region (41) comprises a first bending region (411) and a second bending region (412) between the first bending region (411) and the non-bending regions (42), the bending axis (410) is located in the first bending region (411), and areas and/or densities of the openings (43) in the first bending region (411) and the second bending region (412) are different.

10. The foldable display device as claimed in claim 9, **characterized in that** the area of the openings (43) in the first bending region (411) is greater than the area of the openings (43) in the second bending region (412), and a density of the openings (43) in the first bending region (411) is less than a density of the openings (43) in the second bending region (412).

11. The foldable display device as claimed in claim 10, wherein the area and density of each opening (43) in the first bending region (411) are equal, and the area and density of each opening (43) in the second bending region (412) are equal.

12. The foldable display device as claimed in claim 10, **characterized in that** from the bending axis (410) to the non-bending regions (42), a size of the openings (43) gradually decreases, and the density of the openings (43) gradually increases.

13. The foldable display device as claimed in claim 9, **characterized in that** the openings (43) in the first bending region (411) are blind holes, and openings (43) of the blind holes are toward a side away from or close to the display panel (3).

14. The foldable display device as claimed in claim 1, **characterized in that** an elastic layer (6) is disposed between the display panel (3) and the supporting plate (4), and the elastic layer (6) covers the supporting plate (4) and fills the openings (43).

## Patentansprüche

1. Eine faltbare Anzeigevorrichtung, umfassend einen vorderen Rahmen (1) und eine untere Rahmenbaugruppe (2), die so ausgelegt sind, dass sie die faltbare Anzeigevorrichtung in einen gefalteten Zustand und einen aufgeklappten Zustand bringen können, wobei die faltbare Anzeigevorrichtung umfasst:
ein Displaypaneel (3), das zwischen dem vorderen Rahmen (1) und der unteren Rahmenbaugruppe (2) angeordnet ist; und
eine zwischen dem Displaypaneel (3) und der unteren Rahmenbaugruppe (2) angeordnete Trägerplatte;
wobei die Trägerplatte (4) einen Biegebereich (41) und beidseitig des Biegebereichs (41) nicht biegende Bereiche (42) aufweist, der Biegebereich (41) eine Biegeachse (410) aufweist, der Biegebereich (41) mit einer Vielzahl von Öffnungen (43) versehen ist, die Öffnungen (43) eine fiktive erste Längsachse (a1) und eine fiktive erste Querachse (b1) aufweisen, wobei die erste Längsachse (a1) mit der Biegeachse (410) zusammenfällt oder parallel zu dieser verläuft, die erste Querachse (b1) senkrecht zur Biegeachse (410) steht, **dadurch gekennzeichnet, dass** der Abstand zwischen den Innenwänden beider Seiten der Öffnungen (43) in Richtung der ersten Längsachse (a1) von beiden Enden zur Mitte der Öffnungen (43) entlang der Richtung der ersten Längsachse (a1) allmählich abnimmt,
wobei das Displaypaneel (3) einen Biegebereich (31) aufweist und im aufgeklappten Zustand die Breite einer beliebigen Seite des Biegebereichs (41) der Trägerplatte (4) in einer Richtung senkrecht zur Biegeachse (410) mindestens 1 mm größer als die Breite derselben Seite des Biegebereichs (31) des Displaypaneels ist.

2. Faltbare Anzeigevorrichtung nach Anspruch 1, **dadurch gekennzeichnet, dass** die Öffnungen (43) im Biegebereich (41) in einer Anordnung angeordnet sind und die Öffnungen (43) in zwei benachbarten Spalten entlang einer Richtung senkrecht zur Biegeachse (410) versetzt angeordnet sind.

3. Faltbare Anzeigevorrichtung nach Anspruch 2, wobei entlang der Richtung senkrecht zur Biegeachse (410) ein Abstand zwischen den Öffnungen (43) in einer der beiden benachbarten Spalten von Öffnungen (43) der ersten Querachse (b1) der anderen Spalte der Öffnungen (43) entspricht.

4. Faltbare Anzeigevorrichtung nach Anspruch 2, **dadurch gekennzeichnet, dass** die Trägerplatte (4) mit einer Vielzahl von in Abständen angeordneten Biegeöffnungen (44) versehen ist und die Biegeöffnungen (44) durch Begrenzungen an gegenüberliegenden Seiten des Biegebereichs (41) gebildet sind, die sich jeweils entlang einer Richtung der Biegeachse (410) in Richtung des Biegebereichs (41) erstrecken.

5. Faltbare Anzeigevorrichtung nach Anspruch 4, **dadurch gekennzeichnet, dass** die Biegeöffnungen (44) eine fiktive zweite Längsachse (a2) und eine fiktive zweite Querachse (b2) aufweisen, wobei die zweite Längsachse (a2) mit einer Richtung der ersten Längsachse (a1) der Öffnung (43) in derselben Spalte zusammenfällt und ein Abstand zwischen den Innenwänden beider Seiten der Biegeöffnungen (44), der sich entlang einer Richtung der zweiten Längsachse (a2) erstreckt, von beiden Enden zur Mitte der Biegeöffnungen (44) entlang der Richtung der zweiten Längsachse (a2) allmählich abnimmt.

6. Faltbare Anzeigevorrichtung nach Anspruch 5, **dadurch gekennzeichnet, dass** in der Richtung senkrecht zur Biegeachse (410) eine ungerade Anzahl von Spalten mit Öffnungen (43) zwischen benachbarten Biegeöffnungen (44) auf derselben Seite beabstandet ist, und ein Abstand zwischen den Öffnungen (43) an beiden Enden einer Spalte von Öffnungen (43), die an die Biegeöffnungen (44) angrenzt, und den Grenzen zwischen beiden Seiten des Biegebereichs (41) größer als ein Abstand zwischen der zweiten Querachse (b2) und der Grenze des Biegebereichs (41) ist.

7. Faltbare Anzeigevorrichtung nach Anspruch 1, **dadurch gekennzeichnet, dass** eine Spalte der Öffnungen (43) entlang der zur Biegeachse (410) senkrechten Richtung zwischen den benachbarten Biegeöffnungen (44) angeordnet ist; und
die Breite des Biegebereichs (41) beträgt W, wobei W = n × W1 + 2W2 gilt;
wobei entlang der Richtung senkrecht zur Biegeachse (410) n die Anzahl der Biegeöffnungen (44) auf einer Seite der Trägerplatte (4) ist, W1 der Abstand zwischen einem ersten Ende der Biegeöffnungen (44) und einem ersten Ende der benachbarten Biegeöffnung (44) ist und W2 der maximale Abstand zwischen den Innenwänden auf beiden Seiten der Öffnungen (43) im entfalteten Zustand ist.

8. Faltbare Anzeigevorrichtung nach Anspruch 7, **dadurch gekennzeichnet, dass** eine Länge der Trägerplatte (4) in Richtung der Biegeachse (410) L beträgt und L = N × L2 + 2L1 gilt;
wobei entlang der Richtung der Biegeachse (410) N die Anzahl der Öffnungen (43) in der Spalte von Öffnungen (43) ist, die an die Biegeöffnungen (44) angrenzen, L2 der Abstand zwischen einem ersten Ende der Öffnungen (43) und einem ersten Ende der angrenzenden Öffnungen in derselben Spalte ist und L1 der Abstand zwischen dem ersten Ende der Öffnungen (43) und der Grenze des Biegebereichs (41) ist.

9. Faltbare Anzeigevorrichtung nach Anspruch 2, **dadurch gekennzeichnet, dass** der Biegebereich (41) einen ersten Biegebereich (411) und einen zweiten Biegebereich (412) zwischen dem ersten Biegebereich (411) und den nicht biegenden Bereichen (42) umfasst, wobei sich die Biegeachse (410) im ersten Biegebereich (411) befindet, und die Flächen und/oder Dichten der Öffnungen (43) im ersten Biegebereich (411) und im zweiten Biegebereich (412) unterschiedlich sind.

10. Faltbare Anzeigevorrichtung nach Anspruch 9, **dadurch gekennzeichnet, dass** die Fläche der Öffnungen (43) im ersten Biegebereich (411) größer als die Fläche der Öffnungen (43) im zweiten Biegebereich (412) ist, und die Dichte der Öffnungen (43) im ersten Biegebereich (411) geringer als die Dichte der Öffnungen (43) im zweiten Biegebereich (412) ist.

11. Faltbare Anzeigevorrichtung nach Anspruch 10, wobei die Fläche und die Dichte jeder Öffnung (43) im ersten Biegebereich (411) gleich sind und die Fläche und die Dichte jeder Öffnung (43) im zweiten Biegebereich (412) gleich sind.

12. Faltbare Anzeigevorrichtung nach Anspruch 10, **dadurch gekennzeichnet, dass** von der Biegeachse (410) zu den nicht biegenden Bereichen (42) hin die Größe der Öffnungen (43) allmählich abnimmt und die Dichte der Öffnungen (43) allmählich zunimmt.

13. Faltbare Anzeigevorrichtung nach Anspruch 9, **dadurch gekennzeichnet, dass** die Öffnungen (43) im ersten Biegebereich (411) Sacklöcher sind, und dass die Öffnungen (43) der Sacklöcher zu einer Seite hin ausgerichtet sind, die vom Displaypaneel (3) entfernt oder diesem nahe liegt.

14. Die faltbare Anzeigevorrichtung nach Anspruch 1, **dadurch gekennzeichnet, dass** zwischen dem Displaypaneel (3) und der Trägerplatte (4) eine elastische Schicht (6) angeordnet ist, und dass die elastische Schicht (6) die Trägerplatte (4) bedeckt und die Öffnungen (43) ausfüllt.

## Revendications

1. Dispositif d'affichage pliable, comprenant un cadre avant (1) et un ensemble de cadre inférieur (2) conçus pour permettre au dispositif d'affichage pliable de se plier dans un état plié et de se déplier dans un état déplié, dans lequel le dispositif d'affichage pliable comprend :
un panneau d'affichage (3) disposé entre le cadre avant (1) et l'ensemble de cadre inférieur (2) ; et
une plaque de support disposée entre le panneau d'affichage (3) et l'ensemble de châssis inférieur (2) ;
dans lequel la plaque de support (4) comprend une zone de pliage (41) et des zones non pliables (42) situées de part et d'autre de la zone de pliage (41), la zone de pliage (41) comprend un axe de pliage (410), la zone de pliage (41) est pourvue d'une pluralité d'ouvertures (43), les ouvertures (43) comportent un premier axe long fictif (a1) et un premier axe court fictif (b1), le premier axe long (a1) coïncide avec l'axe de pliage (410) ou est parallèle à celui-ci, le premier axe court (b1) est perpendiculaire à l'axe de pliage (410), **caractérisée en ce que** la distance entre les parois intérieures des deux côtés des ouvertures (43) dans la direction du premier axe long (a1) diminue progressivement depuis les deux extrémités vers le milieu des ouvertures (43) le long de la direction du premier axe long (a1),
dans lequel le panneau d'affichage (3) comprend une zone de pliage (31), et, à l'état déplié, la largeur de n'importe quel côté de la zone de pliage (41) de la plaque de support (4) est supérieure d'au moins 1 mm à la largeur du même côté de la zone de pliage (31) du panneau, dans une direction perpendiculaire à l'axe de pliage (410).

2. Dispositif d'affichage pliable selon la revendication 1, **caractérisé en ce que** les ouvertures (43) sont disposées en réseau dans la zone de pliage (41), et **en ce que** les ouvertures (43) de deux colonnes adjacentes sont décalées les unes par rapport aux autres dans une direction perpendiculaire à l'axe de pliage (410).

3. Dispositif d'affichage pliable selon la revendication 2, dans lequel, dans la direction perpendiculaire à l'axe de pliage (410), un intervalle entre les ouvertures (43) de l'une des deux colonnes adjacentes d'ouvertures (43) correspond au premier axe court (b1) de l'autre colonne d'ouvertures (43).

4. Dispositif d'affichage pliable selon la revendication 2, **caractérisé en ce que** la plaque de support (4) est pourvue d'une pluralité d'ouvertures de pliage (44) disposées à intervalles réguliers, et **en ce que** les ouvertures de pliage (44) sont formées par des limites situées sur les côtés opposés de la zone de pliage (41) et s'étendant respectivement vers la zone de pliage (41) le long d'une direction de l'axe de pliage (410).

5. Dispositif d'affichage pliable selon la revendication 4, **caractérisé en ce que** les ouvertures de pliage (44) comprennent un deuxième axe long fictif (a2) et un deuxième axe court fictif (b2), le deuxième axe long (a2) coïncide avec la direction du premier axe long (a1) de l'ouverture (43) située dans la même colonne, et la distance entre les parois intérieures des deux côtés des ouvertures de pliage (44), s'étendant selon la direction du deuxième axe long (a2), diminue progressivement depuis les deux extrémités vers le milieu des ouvertures de pliage (44) le long de la direction du deuxième axe long (a2).

6. Dispositif d'affichage pliable selon la revendication 5, **caractérisé en ce que**, dans la direction perpendiculaire à l'axe de pliage (410), un nombre impair de colonnes d'ouvertures (43) est espacé entre des ouvertures de pliage adjacentes (44) d'un même côté, et la distance entre les ouvertures (43) situées aux deux extrémités d'une colonne d'ouvertures (43) adjacente aux ouvertures de pliage (44) et aux limites entre les deux côtés de la zone de pliage (41) est supérieure à la distance entre le deuxième axe court (b2) et la limite de la zone de pliage (41).

7. Dispositif d'affichage pliable selon la revendication 1, **caractérisé en ce qu'**une colonne d'ouvertures (43) est espacée entre les ouvertures de pliage adjacentes (44) dans la direction perpendiculaire à l'axe de pliage (410) ; et
la largeur de la zone de pliage (41) est égale à W, et W = n × W1 + 2W2 ;
dans lequel, dans la direction perpendiculaire à l'axe de pliage (410), n représente le nombre d'ouvertures de pliage (44) situées d'un côté de la plaque de support (4), W1 est la distance entre une première extrémité des ouvertures de pliage (44) et une première extrémité de l'ouverture de pliage adjacente (44), et W2 est la distance maximale entre les parois intérieures situées de part et d'autre des ouvertures (43) à l'état déplié.

8. Dispositif d'affichage pliable selon la revendication 7, **caractérisé en ce que** la longueur de la plaque de support (4) dans la direction de l'axe de pliage (410) est égale à L, et L = N × L2 + 2L1 ;
dans lequel, le long de la direction de l'axe de pliage (410), N est le nombre d'ouvertures (43) dans la colonne d'ouvertures (43) adjacente aux ouvertures de pliage (44), L2 est la distance entre une première extrémité des ouvertures (43) et une première extrémité des ouvertures adjacentes dans une même colonne, et L1 est la distance entre la première extrémité des ouvertures (43) et la limite de la zone de pliage (41).

9. Dispositif d'affichage pliable selon la revendication 2, **caractérisé en ce que** la zone de pliage (41) comprend une première zone de pliage (411) et une deuxième zone de pliage (412) située entre la première zone de pliage (411) et les zones non pliables (42), l'axe de pliage (410) étant situé dans la première zone de pliage (411), et que les surfaces et/ou les densités des ouvertures (43) dans la première zone de pliage (411) et la deuxième zone de pliage (412) sont différentes.

10. Dispositif d'affichage pliable selon la revendication 9, **caractérisé en ce que** la surface des ouvertures (43) dans la première zone de pliage (411) est supérieure à la surface des ouvertures (43) dans la deuxième zone de pliage (412), et que la densité des ouvertures (43) dans la première zone de pliage (411) est inférieure à la densité des ouvertures (43) dans la deuxième zone de pliage (412).

11. Dispositif d'affichage pliable selon la revendication 10, dans lequel la surface et la densité de chaque ouverture (43) dans la première zone de pliage (411) sont identiques, et la surface et la densité de chaque ouverture (43) dans la deuxième zone de pliage (412) sont identiques.

12. Dispositif d'affichage pliable selon la revendication 10, **caractérisé en ce que**, depuis l'axe de pliage (410) jusqu'aux zones non pliables (42), la taille des ouvertures (43) diminue progressivement et la densité des ouvertures (43) augmente progressivement.

13. Dispositif d'affichage pliable selon la revendication 9, **caractérisé en ce que** les ouvertures (43) situées dans la première zone de pliage (411) sont des trous borgnes, et **en ce que** les ouvertures (43) de ces trous borgnes sont orientées vers un côté éloigné ou proche du panneau d'affichage (3).

14. Dispositif d'affichage pliable selon la revendication 1, **caractérisé en ce qu'**une couche élastique (6) est disposée entre le panneau d'affichage (3) et la plaque de support (4), et **en ce que** la couche élastique (6) recouvre la plaque de support (4) et comble les ouvertures (43).
